# EUROPÄISCHE PATENTSCHRIFT

(11) **EP 0 709 589 B1**
(45) Veröffentlichungstag und Bekanntmachung des Hinweises auf die Patenterteilung: **02.06.1999**
(21) Anmeldenummer: 95111928.8
(22) Anmeldetag: 28.07.1995
(51) Int. Cl.: F16C 33/76

(54) **Axiallager mit einer benachbarten Abdichtung**
Axial bearing with an adjacent sealing
Palier axial avec un joint d'étanchéité voisin

(30) Priorität: 31.10.1994 DE 4438957
(43) Veröffentlichungstag der Anmeldung: 01.05.1996
(73) Patentinhaber: Ford-Werke Aktiengesellschaft, 50735 Köln (DE)
(72) Erfinder: Premiski, Vladimir, Ing., D-53909 Zuelpich-Buervenich (DE); Wehren, Wilhelm, Ing., D-50171 Kerpen/Blatzheim (DE); Silk Mark, Ing., 50767 Köln (DE)
(74) Vertreter: Gauger, Hans-Peter, Dipl.-Ing.

(56) Entgegenhaltungen:
- AT-B- 279 977
- AT-B- 325 353
- DE-A- 2 507 900
- FR-A- 1 341 765
- FR-A- 2 136 262
- US-A- 4 981 373

## Beschreibung

Die Erfindung bezieht sich auf ein Axiallager mit einer benachbarten Abdichtung zwischen zwei Bauteilen, die Laufflächen für die durch einen Käfig gehaltenen Wälzkörper des Lagers bilden.

Bei einem aus der FR-A-1 327 643 bekannten Axiallager dieser Art besteht der Käfig aus einem für eine Abdichtung des die Wälzkörper aufnehmenden Lagerraumes zwischen den Laufflächen der benachbarten Bauteile geeigneten Kunststoff und ist radial außerhalb der Wälzkörper mit elastischen Dichtlippen versehen, die an dem Umfang des Käfigs axial ausgerichtet sind und an den Laufflächen der Bauteile abdichtend anliegen. Die Bauteile sind dabei integrierte Druckscheiben des mit Nadeln ausgebildeten Axiallagers, wobei diese Druckscheiben auch eine an ihrem Außenrand sich wechselseitig übergreifende Anordnung haben können, um im Bereich dieses Übergriffs eine ergänzende Labyrinthdichtung für den die Wälzkörper aufnehmenden Lagerraum zu erhalten. Eine ähnliche Lagerausbildung mit einer entsprechenden Abdichtung ist auch aus der DE-A-1 575 691 bekannt, wobei hier die Wälzkörper, die durch den ebenfalls als ein Dichtungskörper fungierenden Käfig gehalten sind, auch als Kugeln oder Kegelrollen ausgebildet sein können.

Aus der DE 29 22 476 A1 ist daneben ein Axiallager der eingangs genannten Art bekannt, bei welchem das eine der beiden Bauteile durch eine als ein Montageteil des Lagers integrierte axiale Anlaufscheibe für die Wälzkörper ausgebildet ist. Bei diesem Axiallager wird eine radiale Abdichtung der benachbarten Bauteile mittels eines separaten Dichtungskörpers aus einem elastomeren Material erhalten. Der Dichtungskörper ist an einem axial ausgerichteten Flansch des einen scheibenförmigen Bauteils angeordnet und liegt mit einer Dichtlippe an dem anderen Bauteil an, sodaß mit dieser Dichtlippe eine von dem Käfig unabhängige Abdichtung des Lagers in radialer Richtung erhalten wird. Der Dichtungskörper ist außerdem mittels einer mit ihm durch Klebung oder sonstwie fest verbundenen Metallscheibe an dem Flansch dieses einen Bauteils auch mechanisch befestigt.

Aus der US 47 33 979 ist ein Axiallager bekannt, bei dem eine radiale Abdichtung zwischen zwei Bauteilen, die ohne die Verwendung eines separaten Käfigs die Laufflächen für die Wälzkörper des Lagers bilden, mittels einer Tellerfeder erhalten wird, die dabei aber primär ein Vorspannmittel für ein Hilfslager mit einer Ausbildung durch zwei Gleitringe bildet.

Der Erfindung liegt die Aufgabe zugrunde, für ein Axiallager der durch den Oberbegriff der nebengeordneten Patentansprüche 1 und 12 angegebenen Art eine Abdichtung in radialer Richtung in Bezug auf die mit den benachbarten Bauteilen gemeinsame Lagerachse bereitzustellen, die von dem die Wälzkörper des Lagers haltenden Käfig unabhängig ist und ohne einen separaten Dichtungskörper für die radiale Abdichtung der benachbarten Bauteile auskommt.

Diese Aufgabe wird bei einem Axiallager mit einer benachbarten Abdichtung zwischen zwei Bauteilen erfindungsgemäß dadurch gelöst, daß die Anlaufscheibe an einer mittigen Zentrieröffnung mit einer konischen Sitzfläche versehen ist, über welche die Anlaufscheibe radial federnd mit einer komplementär ausgebildeten Gleitfläche für eine radiale Abdichtung verspannbar ist. Die Gleitfläche ist dabei bevorzugt an einem koaxialen Dichtungsring des Lagers ausgebildet, der zweckmäßig mit einem Außenkonus versehen ist, um eine abdichtende Verspannung mit der dann zweckmäßig als ein Innenkonus einer mittigen Spannhülse der Anlaufscheibe ausgebildeten konischen Sitzfläche zu erhalten.

Für eine alternative Ausbildung des erfindungsgemäßen Axiallagers kann die als ein Montageteil des Lagers integrierte axiale Anlaufscheibe an ihrer mittigen Zentrieröffnung auch mit einer randseitigen Abstützkante für den Innenrand einer axial spreizenden Tellerfeder versehen sein, mittels welcher das Lager zwischen der Anlaufscheibe und dem benachbarten Bauteil derart axial verspannbar ist, daß mit dem an dem benachbarten Bauteil anliegenden Außenrand der Tellerfeder eine radiale Abdichtung erhalten wird.

Die Erfindung wird nachfolgend für mehrere in der Zeichnung schematisch dargestellte Ausführungsbeispiele des Axiallagers näher erläutert. Es zeigt
- Fig. 1: eine Teilschnittdarstellung eines Axiallagers gemäß einer ersten Ausführungsform,
- Fig. 2: eine Teilschnittdarstellung eines Axiallagers gemäß einer zweiten Ausführungsform,
- Fig. 3: eine Teilschnittdarstellung eines Axiallagers gemäß einer dritten Ausführungsform und
- Fig. 4: eine Teilschnittdarstellung eines Axiallagers gemäß einer zu den Fig. 1 - 3 alternativen Ausführungsform in der Kombination mit einem Radiallager.

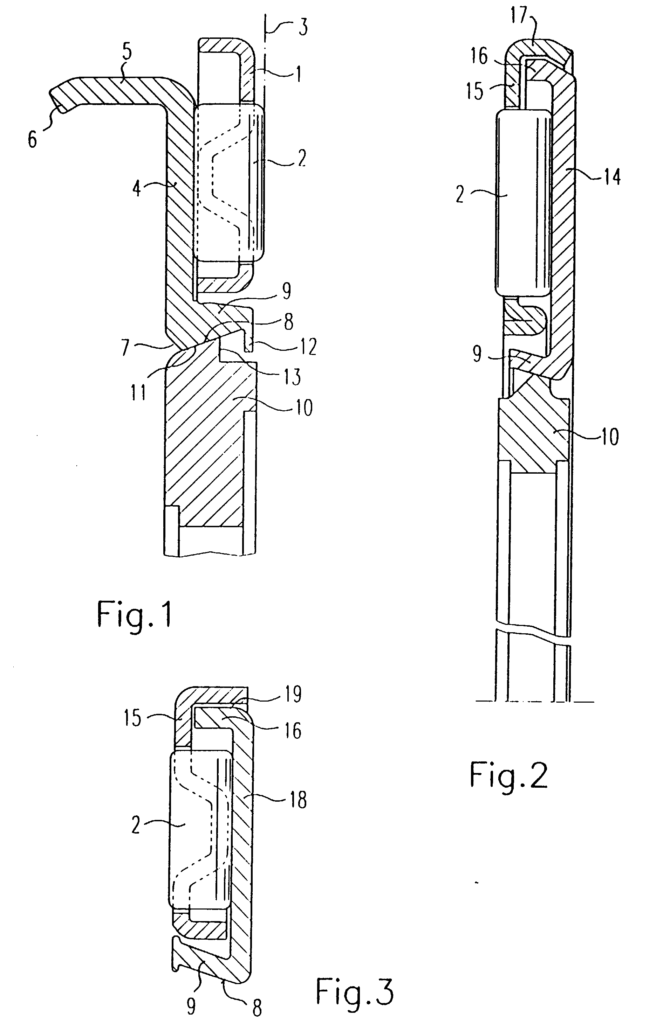

Gemäß der in Fig. 1 schematisch gezeigten Teilschnittdarstellung eines Axiallagers ist das Lager mit einem Käfig 1 und mit als Zylinderrollen 2 ausgebildeten Nadeln gebildet, die durch den Käfig 1 gehalten werden. Die Zylinderrollen 2 sind für eine Berührung mit Laufflächen an zwei benachbarten Bauteilen vorgesehen, von welchen das eine Bauteil bspw. der Planetenradträger eines Planetenräder-Umschaltgetriebes für Kraftfahrzeuge ist, auf welchem die jeweils durch ein Axiallager an dem Träger abgestützten Planetenräder drehbar gelagert sind. In Fig. 1 ist die Lauffläche, die für die Zylinderrollen 2 an einem solchen ersten benachbarten Bauteil ausgebildet ist, mit der strichpunktierten Linie 3 angegeben.

Die Lauffläche eines zweiten benachbarten Bauteils für die durch den Käfig 1 gehaltenen Zylinderrollen 2 ist durch eine Anlaufscheibe 4 ausgebildet, die an ihrem Außenrand auf der zu dem Käfig 1 abgewandten Scheibenseite mit einem axial verlaufenden bundförmigen Ansatz 5 versehen ist, der randseitig eine Haltenase 6 aufweist, über welche die Anlaufscheibe 4 bei dem vorerwähnten Anwendungsfall in eine Halterille an der Nabe eines zugeordneten, an dem Planetenradträger gelagerten Planetenrades einfassen würde.

Die Anlaufscheibe 4 ist an einer mittigen Zentrieröffnung 7 mit einer konischen Sitzfläche 8 versehen, die als ein Innenkonus einer mittigen Spannhülse 9 der Anlaufscheibe ausgebildet ist. Über diese als Innenkonus ausgebildete konische Sitzfläche 8 ist die Anlaufscheibe 4 auf einer als Außenkonus eines koaxialen Dichtungsringes 10 des Lagers komplementär ausgebildeten Gleitfläche 11 verspannbar, wobei das Verspannen der Anlaufscheibe 4 mit dem Dichtungsring 10 an diesen zusammenwirkenden Konusflächen 8 und 11 in axialer Richtung bewirkt wird.

Die Spannhülse 9 der Anlaufscheibe 4 ist dafür etwas radial federnd ausgebildet. Damit wird bezweckt, daß an den zusammenwirkenden Konusflächen 8 und 11 eine ausreichend große radiale Abdichtung in Bezug auf die Lagerachse erhalten wird, sobald im eingebauten Zustand des Axiallagers die Anlaufscheibe 4 ihre fertig eingebaute Relativlage zu dem Dichtungsring 10 erhalten hat. Die radial federnde Ausbildung der Spannhülse 9 erfüllt weiterhin den Zweck, daß die Anlaufscheibe 4 und der Dichtungsring 10 zu einer unverlierbaren Montageeinheit unter Vermittlung einer Schnappverbindung zusammengefügt werden können, die durch eine Haltenase 12 an dem größeren Öffnungsdurchmesser des Innenkonus der Spannhülse 9 im Zusammenwirken mit einem axialen Begrenzungsanschlag 13 verwirklicht ist, der mit einer umfangsseitigen Stufe axial neben der Gleitfläche 11 des Dichtungsringes 10 ausgebildet ist. Als Folge dieser Schnappverbindung kann die Anlaufscheibe 4 - in der Darstellung gemäß Fig. 1 - von links nach rechts mit dem Innenkonus ihrer mittigen Spannhülse 9 auf den Außenkonus des Dichtungsringes 10 in axialer Richtung aufgeschoben werden. Während dieses Aufschiebens läuft die Haltenase 12 solange über den Außenkonus des Dichtungsringes, bis sie an dem Begrenzungsanschlag 13 in die Stufe an dem Außenumfang des Dichtungsringes einfällt. Der Innenkonus der Spannhülse liegt dann an dem Außenkonus des Dichtungsringes abdichtend an.

Bei der in Fig. 2 gezeigten abgewandelten Ausführungsform des Axiallagers ist eine Anlaufscheibe 14 vorgesehen, deren Außenrand mit einem in Richtung des Käfigs 15 axial verlaufenden bundförmigen Ansatz 16 versehen ist, der von einem axial entgegengesetzt ausgerichteten Ansatz 17 am Außenrand des Käfigs 15 übergriffen wird. An dem randseitigen Übergriff der Anlaufscheibe 14 und des Käfigs 15 wird damit eine Art Labyrinthdichtung erhalten, durch welche der die Zylinderrollen 2 aufnehmende Lagerraum noch zusätzlich radial nach außen abgedichtet wird. Auch bei dieser Ausführungsform ist ein Dichtungsring 10 vorgesehen, der an einem Außenkonus mit dem Innenkonus einer radial federnden Spannhülse 9 verspannt ist, die wie bei dem Axiallager der Fig. 1 für die mittige Zentrieröffnung der Anlaufscheibe 14 vorgesehen ist.

Bei der in Fig. 3 dargestellten weiteren alternativen Ausführungsform des Axiallagers ist für eine entsprechende Anlaufscheibe 18 ein randseitiger Übergriff des Käfigs 15 gezeigt, der über den Umfang der Anlaufscheibe 18 an mehreren, gleich voneinander beabstandeten Prägestellen 19 eine wechselseitige Fixierung der Anlaufscheibe und des Käfigs ergibt. Die Anlaufscheibe 18 ist an einer mittigen Spannhülse 9 mit einer konischen Sitzfläche 8 versehen, die ein Zusammenwirken mit einer komplementär ausgebildeten Gleitfläche ergibt, um eine radiale Abdichtung zu erhalten.

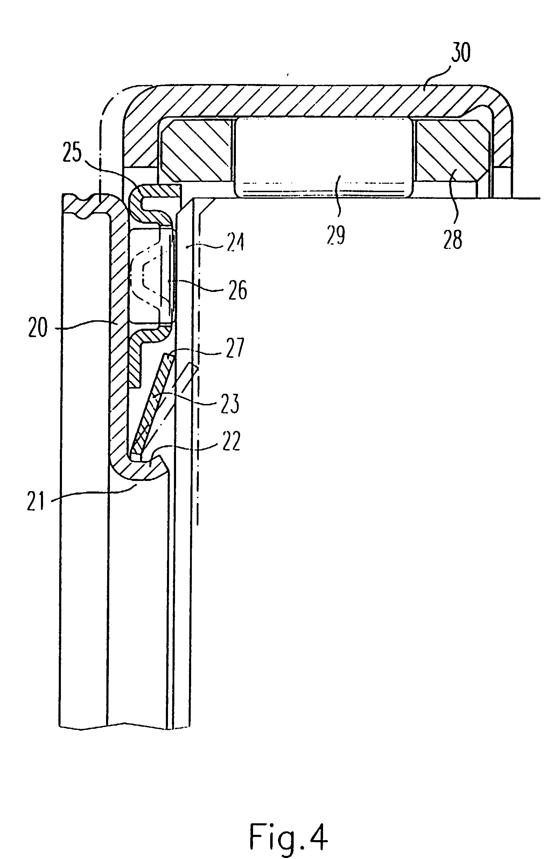

In Fig. 4 ist eine zu den vorbeschriebenen Ausführungsformen alternative Ausführungsform eines Axiallagers gezeigt. Eine Anlaufscheibe 20 ist hier an ihrer mittigen Zentrieröffnung 21 mit einer randseitigen Abstützkante 22 für den Innenrand einer axial spreizenden Tellerfeder 23 versehen, mittels welcher das Lager zwi-schen der Anlaufscheibe 20 und dem benachbarten Bauteil 24 axial verspannt wird, welches die zu der Anlaufscheibe gegenüberliegende Lauffläche für die durch einen Käfig 25 gehaltenen Zylinderrollen 26 bildet. Die Abstützung der Tellerfeder 23 mit ihrem Innenrand an der umgebogenen Abstützkante 22 ist derart gewählt, daß bei der axialen Verspannung der Tellerfeder mit deren an dem Bauteil 24 anliegendem Außenrand 27 eine radiale Abdichtung erhalten wird. Der Außenrand 27 der Tellerfeder 23 ist mit zwei Relativlagen gezeigt, von welchen die steilere Relativlage die fertige Einbaulage ergibt, in welchem die Zylinderrollen 26 des Axiallagers an den Laufflächen der Anlaufscheibe 20 und des Bauteils 24 anliegen.

In Fig. 4 ist daneben noch ein Radiallager mit einem Käfig 28 für Zylinderrollen 29 gezeigt, die an der Umfangsfläche des als eine Welle dargestellten Bauteils 24 laufen. Das Radiallager wird durch einen Außenlaufring 30 vervollständigt.

## Patentansprüche

1. Axiallager mit einer benachbarten Abdichtung zwischen zwei Bauteilen, die Laufflächen für die durch einen Käfig (1, 15) gehaltenen Wälzkörper (2) des Lagers bilden, wobei eines der beiden Bauteile durch eine als ein Montageteil des Lagers integrierte axiale Anlaufscheibe (4, 14, 18) für die Wälzkörper (2) ausgebildet ist, dadurch gekennzeichnet, daß die Anlaufscheibe (4, 14, 18) an einer mittigen Zentrieröffnung (7) mit einer konischen Sitzfläche (8) versehen ist, über welche die Anlaufscheibe radial federnd mit einer komplementär ausgebildeten Gleitfläche (11) für eine radiale Abdichtung verspannbar ist.

2. Axiallager nach Anspruch 1, dadurch gekennzeichnet, daß die konische Sitzfläche (8) der Anlaufscheibe (4, 14, 18) mit dem Innenkonus einer mittigen Spannhülse (9) der Anlaufscheibe ausgebildet ist.

3. Axiallager nach Anspruch 1 oder 2, dadurch gekennzeichnet, daß die Gleitfläche (11) mit einem Außenkonus an einem koaxialen Dichtungsring (10) des Lagers ausgebildet ist.

4. Axiallager nach Anspruch 2 oder 3, dadurch gekennzeichnet, daß die mittige Spannhülse (9) der Anlaufscheibe (4, 14, 18) eine axiale Breite größer als die Dicke der Anlaufscheibe aufweist.

5. Axiallager nach einem der Ansprüche 2 bis 4, dadurch gekennzeichnet, daß die axiale Breite des Dichtungsringes (10) etwas kleiner ist als die axiale Gesamteinbaubreite des mit dem Käfig (1, 15), den Wälzkörpern (2) und der Anlaufscheibe (4, 14, 18) ausgebildeten Lagers.

6. Axiallager nach einem der Ansprüche 2 bis 5, dadurch gekennzeichnet, daß der Innenkonus der Spannhülse (9) der Anlaufscheibe (4, 14, 18) eine größere axiale Breite aufweist als der Außenkonus des Dichtungsringes (10).

7. Axiallager nach einem der Ansprüche 1 bis 6, dadurch gekennzeichnet, daß die Anlaufscheibe (4, 14, 18) und der Dichtungsring (10) über eine Schnappverbindung (12, 13) miteinander verbunden sind, die an dem größeren Öffnungsdurchmesser der konischen Sitzfläche (8) bezüglich eines axialen Begrenzungsanschlages (13) an der Gleitfläche (11) wirksam ist.

8. Axiallager nach einem der Ansprüche 1 bis 7, dadurch gekennzeichnet, daß die konische Sitzfläche (8) der Anlaufscheibe (4, 14, 18) unter einem Konuswinkel von etwa 15 Grad gegen die Achse des Lagers ausgerichtet ist.

9. Axiallager nach einem der Ansprüche 1 bis 8, dadurch gekennzeichnet, daß der Außenrand der Anlaufscheibe (4) auf der zu dem Käfig (1) abgewandten Scheibenseite mit einem axial verlaufenden Ansatz (5, 6) versehen ist, über welchen die Anlaufscheibe an einem benachbarten Bauteil fixierbar ist.

10. Axiallager nach Anspruch 9, dadurch gekennzeichnet, daß der Ansatz (5) eine Haltenase (6) aufweist, über welche eine Schnappverbindung mit dem benachbarten Bauteil ermöglicht wird.

11. Axiallager nach einem der Ansprüche 1 bis 8, dadurch gekennzeichnet, daß der Außenrand der Anlaufscheibe (14, 18) mit einem in Richtung des Käfigs (15) axial verlaufenden Ansatz (16) versehen ist, der von einem axial entgegengesetzt ausgerichteten Ansatz (17) am Außenrand des Käfigs (15) unter Ausbildung einer Labyrinthdichtung übergriffen oder hintergriffen wird.

12. Axiallager mit einer benachbarten Abdichtung zwischen zwei Bauteilen, die Laufflächen für die durch einen Käfig (25) gehaltenen Wälzkörper (26) des Lagers bilden, wobei eines der beiden Bauteile durch eine als ein Montageteil des Lagers integrierte axiale Anlaufscheibe (20) für die Wälzkörper (26) ausgebildet ist, dadurch gekennzeichnet, daß die Anlaufscheibe (20) an einer mittigen Zentrieröffnung (21) mit einer randseitigen Abstützkante (22) für den Innenrand einer axial spreizenden Tellerfeder (23) versehen ist, mittels welcher das Lager zwischen der Anlaufscheibe (20) und dem benachbarten Bauteil (24) derart axial verspannbar ist, daß mit dem an dem benachbarten Bauteil (24) anliegenden Außenrand (27) der Tellerfeder (23) eine radiale Abdichtung erhalten wird.

## Claims

1. An axial bearing with an adjoining seal between two members which form contact surfaces for the rolling elements (2) of the bearing, which are held by means of a cage (1, 15), wherein one of the two members is formed by a thrust washer (4, 14, 18), for the rolling elements (2), which is integrated as a part of the bearing assembly, characterised in that the thrust washer (4, 14, 18) is provided at a central centering opening (7) with a conical seating surface (8) through which the thrust washer can be resiliently loaded radially by a sliding surface (11) of complementary shape to provide a radial seal.

2. An axial bearing according to claim 1, characterised in that the conical seating surface (8) of the thrust washer (4, 14, 18) is formed by the internal cone of a clamping collar (9) in the middle of the thrust washer.

3. An axial bearing according to claim 1 or claim 2, characterised in that the sliding surface (11) is formed by an external cone on a coaxial packing ring (10) of the bearing.

4. An axial bearing according to claim 2 or claim 3, characterised in that the clamping collar (9) in the middle of the thrust washer (4, 14, 18) has an axial width greater than the thickness of the thrust washer.

5. An axial bearing according to one of claims 2 to 4, characterised in that the axial width of the packing ring (10) is somewhat less than the total axial installed width of the bearing assembly made up of the cage (1, 15), the rolling elements (2) and the thrust washer (4, 14, 18).

6. An axial bearing according to one of claims 2 to 5, characterised in that the internal cone of the clamping collar (9) of the thrust washer (4, 14, 18) has a greater axial width than the external cone of the packing ring (10).

7. An axial bearing according to one of claims 1 to 6, characterised in that the thrust washer (4, 14, 18) and the packing ring (10) are connected together by means of a snap fastening (12, 13) which is effective at the greater opening diameter of the conical seating surface (8) with respect to an axially limiting stop (13) on the sliding surface (11).

8. An axial bearing according to one of claims 1 to 7, characterised in that the conical seating surface (8) of the thrust washer (4, 14, 18) is oriented to the axis of the bearing at a conical angle of about 15°.

9. An axial bearing according to one of claims 1 to 8, characterised in that the outer rim of the thrust washer (4) is provided on the side of the washer remote from the cage (1) with an axially extending extension (5, 6) by means of which the thrust washer can be fixed to an adjacent member.

10. An axial bearing according to claim 9, characterised in that the extension (5) has a retaining lug (6) by means of which a snap connection to the adjacent member can be made.

11. An axial bearing according to one of claims 1 to 8, characterised in that the outer rim of the thrust washer (14, 18) is provided with an extension (16) extending axially towards the cage (15) which an axially oppositely oriented extension (17) on the outer rim of the cage (15) can overlap or engage behind with the formation of a labyrinth seal.

12. An axial bearing with an adjoining seal between two members which form contact surfaces for the rolling elements (26) of the bearing held by means of a cage (25), wherein one of the two members is formed by an axial thrust washer (20) for the rolling elements (26) which is integrated as a part of the bearing assembly, characterised in that the thrust washer (20) and is provided at the rim of a central centering opening (21) with a supporting edge (22) for the inner rim of an axially expanding Belleville spring (23) by means of which the bearing can be resiliently loaded axially between the thrust washer (20) and the adjacent member (24) in such a way that a radial seal is obtained by the outer rim (27) of the Belleville spring (23) bearing on the adjacent member (24).

## Revendications

1. Palier à charge axiale avec un étanchement voisin entre deux éléments qui forment des surfaces de roulement pour les corps de révolution (2) du palier, maintenus par une cage (1, 15), un des deux éléments étant formé par une bague de portée axiale (4, 14, 18) pour les corps de révolution (2), intégrée comme élément de montage du palier, **caractérisé** en ce que la bague de portée (4, 14, 18) est pourvue, sur une ouverture de centrage médiane (7), d'une surface d'appui conique (8) par l'intermédiaire de laquelle la bague de portée peut être serrée en élasticité radiale contre une surface de glissement (11) de configuration complémentaire, pour un étanchement radial.

2. Palier à charge axiale selon la revendication 1, **caractérisé** en ce que la surface d'appui conique (8) de la bague de portée (4, 14, 18) est formée par le cône intérieur d'une douille de serrage médiane (9) de la bague de portée.

3. Palier à charge axiale selon la revendication 1 ou 2, **caractérisé** en ce que la surface de glissement (11) est formée par un cône extérieur sur une bague d'étanchéité coaxiale (10) du palier.

4. Palier à charge axiale selon la revendication 2 ou 3, **caractérisé** en ce que la douille de serrage médiane (9) de la bague de portée (4, 14, 18) présente une largeur axiale supérieure à l'épaisseur de la bague de portée.

5. Palier à charge axiale selon une des revendications 2 à 4, **caractérisé** en ce que la largeur axiale de la bague d'étanchéité (10) est légèrement inférieure à la largeur d'installation axiale totale du palier formé par la cage (1, 15), les corps de révolution (2) et la bague de portée (4, 14, 18).

6. Palier à charge axiale selon une des revendications 2 à 5, **caractérisé** en ce que le cône intérieur de la douille de serrage (9) de la bague de portée (4, 14, 18) présente une plus grande largeur axiale que le cône extérieur de la bague d'étanchéité (10).

7. Palier à charge axiale selon une des revendications 1 à 6, **caractérisé** en ce que la bague de portée (4, 14, 18) et la bague d'étanchéité (10) sont mutuellement assemblées au moyen d'un assemblage par enclenchement (12, 13), qui est actif entre le plus grand diamètre d'ouverture de la surface d'appui conique (8) et une butée de délimitation axiale (13) sur la surface de glissement (11).

8. Palier à charge axiale selon une des revendications 1 à 7, **caractérisé** en ce que la surface d'appui conique (8) de la bague de portée (4, 14, 18) est orientée sous un angle de cône d'environ 15 degrés par rapport à l'axe du palier.

9. Palier à charge axiale selon une des revendications 1 à 8, **caractérisé** en ce que le bord extérieur de la bague de portée (4) est doté, sur le côté de la bague qui est opposé à la cage (1), d'un épaulement (5, 6) s'étendant axialement, au moyen duquel la bague de portée peut être fixée en position sur un élément voisin.

10. Palier à charge axiale selon la revendication 9, **caractérisé** en ce que l'épaulement (5) présente un ergot de retenue (6), qui permet un assemblage par enclenchement avec l'élément voisin.

11. Palier à charge axiale selon une des revendications 1 à 8, **caractérisé** en ce que le bord extérieur de la bague de portée (14, 18) est doté d'un épaulement (16), s'étendant axialement en direction de la cage (15), par dessus ou par derrière lequel un épaulement (17), orienté axialement en direction opposée et prévu sur le bord extérieur de la cage (15), s'engage en formant un joint d'étanchéité à labyrinthe.

12. Palier à charge axiale avec un étanchement voisin entre deux éléments qui forment des surfaces de roulement pour les corps de révolution (26) du palier, maintenus par une cage (25), un des deux éléments étant formé par une bague de portée axiale (20) pour les corps de révolution (26), intégrée comme élément de montage du palier, **caractérisé** en ce que la bague de portée (20) est pourvue, sur une ouverture de centrage médiane (21), d'une arête d'appui périphérique (22) pour le bord intérieur d'une rondelle-ressort (23) à élargissement axial, au moyen de laquelle le palier peut être serré axialement entre la bague de portée (20) et l'élément voisin (24) de telle sorte qu'un étanchement radial est obtenu par l'application contre l'élément voisin (24) du bord extérieur (27) de la rondelle-ressort (23).
